# EUROPEAN PATENT APPLICATION

(11) **EP 2 692 713 A1**
(43) Date of publication of application: **05.02.2014**
(21) Application number: 12762962.4
(22) Date of filing: 28.03.2012
(51) Int. Cl.: C04B 41/87, A47K 1/04, B01J 35/02, C04B 41/86, C04B 41/89, E03D 9/00, E03D 11/02, E03D 13/00

(54) **SANITARY WARE**

(30) Priority: 30.03.2011 JP 2011074621
(71) Applicant: Toto Ltd., Fukuoka 802-8601 (JP)
(72) Inventor: YAGI, Shinichi, Kitakyushu-shi Fukuoka 802-8601 (JP); HINO, Takahiro, Kitakyushu-shi Fukuoka 802-8601 (JP); ICHIKI, Tomoyasu, Kitakyushu-shi Fukuoka 802-8601 (JP); AMEMORI, Hiroaki, Kitakyushu-shi Fukuoka 802-8601 (JP); TAKANO, Satoshi, Kitakyushu-shi Fukuoka 802-8601 (JP); TOKUDOME, Hiromasa, Kitakyushu-shi Fukuoka 802-8601 (JP)
(74) Representative: Takeuchi, Maya
(86) International application number: PCT/JP2012/058114
(87) International publication number: WO 2012/133523

(57) **Abstract**

Disclosed is a sanitary ware including a photocatalyst layer that has a high level of water resistance and abrasion resistance while maintaining a good photocatalytic activity. The sanitary ware includes a glaze layer and a photocatalyst layer provided on the glaze layer. The photocatalyst layer is an oxide film that is a co-fired product of a precursor of titanium oxide and a precursor of zirconium oxide and contains 65 to 90% by mass of titanium oxide and 10 to 35% by mass of zirconium oxide.

## Description

### [RELATED APPLICATION]

This application claims the priority of Japanese Patent Application No. 74621/2011, filed on March 30, 2011, the disclosure of which is incorporated herein by reference.

### [TECHNICAL FIELD]

The present invention relates to sanitary wares including toilet bowls, urinals, washbowls, or wash hand basin and more particularly relates to sanitary wares having on their surface a photocatalyst layer that possesses a high level of water resistance and abrasion resistance.

### [BACKGROUND ART]

Some sanitary wares are known for having a photocatalyst layer provided on the surface of the sanitary ware, for example, the surface of toilet bowls and such sanitary wares can suppress the deposition of contaminants thereon by a hydrophilicity developed upon exposure of the photocatalyst layer to ultraviolet light, and thus have an improved water-flushing function. Such treated sanitary wares can suppress the deposition of contaminants thereon by a hydrophilicity and, at the same time, can suppress bacterial growth by photocatalytic decomposition activity. By virtue of these properties, a cleaning burden can be highly alleviated.

For such sanitary wares, JP H09(1997)-78665 (PTL 1) discloses toilet bowls that have on their surface a layer containing titanium oxide and silica and suppress the deposition of contaminants by a hydrophilicity developed by exposure to ultraviolet light. Further, JP H11(1999)-228865 (PTL 2) proposes the use of a titanium alkoxide and a silicon alkoxide from the viewpoint of enhancing the hardness of the photocatalyst layer. Furthermore, JP H10(1998)-114546 (PTL 3) discloses that the activity of the photocatalyst can be maintained for a long period of time by covering a titanium oxide layer with a zirconium alkoxide and firing the assembly.

In the sanitary ware having the photocatalyst layer, it has become apparent that, since the sanitary ware is placed under a relatively wet environment, the photocatalyst layer is deteriorated by water. In particular, it has become apparent that ions dissolved in tap water seem to accelerate the deterioration. Accordingly, the photocatalyst layer provided on the surface of the sanitary ware should be resistant to water (this property will be hereinafter sometimes referred to as water resistance). In addition, while the photocatalyst layer may reduce the frequency of cleaning required, the photocatalyst layer is exposed to a sever condition such as scrubbing the surface with a brush in cleaning. Accordingly, a high level of abrasion resistance is required of the photocatalyst layer provided on the surface of the sanitary ware.

### [Citation List]

### [Patent Literature]

[PTL 1] JP H9(1997)-78665A
[PTL 2] JP H11 (1999)-228865A
[PTL 3] JP H10(1998)-114546A

### [SUMMARY OF THE INVENTION]

The present inventors have now found that a photocatalyst layer on the surface of a glaze on a sanitary ware, which is good in water resistance and abrasion resistance while maintaining a good photocatalytic activity can be achieved with an oxide film constituting the photocatalyst layer obtained by co-firing a precursor of titanium oxide and a precursor of zirconium oxide. The present invention has been made based on such finding.

Accordingly, an object of the present invention is to provide a sanitary ware with a photocatalyst layer provided thereon, the photocatalyst layer having a high level of water resistance and abrasion resistance while maintaining a good photocatalytic activity, and a process for producing the same.

According to one aspect of the present invention, there is provided a sanitary ware comprising a glaze layer and a photocatalyst layer provided on the glaze layer, wherein the photocatalyst layer is an oxide film comprising a co-fired product of a precursor of titanium oxide and a precursor of zirconium oxide and contains 65 to 90% by mass of titanium oxide and 10 to 35% by mass of zirconium oxide.

According to another aspect of the present invention, there is provided a process for producing the above sanitary ware, the process comprising at least applying a solution containing at least a precursor of titanium oxide and a precursor of zirconium oxide on a surface of the sanitary ware and then firing the coating to form a photocatalyst layer.

### [DESCRIPTION OF EMBODIMENTS]

### Definition

The term "sanitary ware" as used herein means a ceramic ware product used in toilets and around lavatories, specifically toilet bowls, urinals, strainers for urinals, flush tanks for toilets or urinals, washbowls in washstands, or wash hand basins. The term "ware" means, among ceramic wares, those that have a degree of body sintering that is somewhat water-absorptive and have a surface to which a glaze has been applied.

### Photocatalyst layer

The sanitary ware according to the present invention has on its surface a photocatalyst layer formed of an oxide film that is a co-fired product of a precursor of titanium oxide and a precursor of zirconium oxide.

In the present invention, titanium alkoxides and titanium chelates are suitable as the precursor of titanium oxide. The titanium alkoxide is represented by general formula: Ti(OR)₄ and is not particularly limited as long as photocatalytic titanium oxide is formed by hydrolysis. In the formula, a part of (OR) may be substituted by acetyl acetonate (C₅H₇O₂) or ethyl acetoacetate (C₆H₉O₃). In a preferred embodiment of the present invention, the titanium alkoxide is such that R moiety that is an organic group in the alkoxide (RO-) is a lower (preferably C₁₋₆) alkyl group. Specific examples of preferred titanium alkoxides include tetraethoxytitanium, tetraisopropoxytitanium, tetra-n-propoxytitanium, tetrabutoxytitanium, tetramethoxytitanium, titanium diisopropoxybis(acetyl acetonate), titanium diisopropoxybis(ethyl acetoacetate), and mixtures thereof. For example, titanium tetraacetyl acetonate may be mentioned as the titanium chelate.

Zirconium alkoxide and zirconium chelate are suitable as the precursor of zirconium oxide. The zirconium alkoxide is basically represented by general formula Zr(OR)₄ and is not particularly limited as long as zirconium oxide is formed by hydrolysis. In the formula, a part of (OR) may be substituted by acetyl acetonate (C₅H₇O₂) or ethyl acetoacetate (C₆H₉O₃). In a preferred embodiment of the present invention, the zirconium alkoxide is such that R moiety that is an organic group in the alkoxide (RO-) is a lower (preferably C₂₋₆) alkyl group. Specific examples of preferred zirconium alkoxides include zirconium tetraethoxide, zirconium tetraisopropoxide, zirconium tetrabutoxide, zirconium tributoxy monoacetyl acetonate, zirconium dibutoxybis(ethyl acetoacetate), zirconium monobutoxy acetyl acetonate bis(ethyl acetoacetate), and mixtures thereof. For example, zirconium tetraacetyl acetonate may be mentioned as the zirconium chelate.

In the present invention, an oxide film is a co-fired product of a precursor of titanium oxide and a precursor of zirconium oxide. The firing may be carried out under temperature and time conditions that are necessary for the conversion of the precursor of titanium oxide to photocatalytic titanium oxide and the conversion of precursor of zirconium oxide to zirconium oxide. The temperature and the time may be properly determined as long as titanium oxide having a good photocatalytic activity and a water-resistant and abrasion-resistant oxide film are obtained. For example, the firing may be carried out at a temperature of 700 to 800°C for 0.5 to 3 hr, preferably at a temperature of 725 to 775°C for about 1 to 2 hr.

In the present invention, the photocatalyst layer formed of an oxide film that is a co-fired product of a precursor of titanium oxide and a precursor of zirconium oxide has a high level of water resistance and abrasion resistance. The reason for this has not been elucidated yet but is considered as follows. The following explanation is hypothetical, and the present invention is not bound thereby. It is believed that a Zr-O-Ti bond that is chemically and physically stronger than a Ti-O-Ti bond is formed by the deposition of zirconium oxide on the surface of photocatalytic, that is, crystalline, titanium oxide, and, further, a Zr-O-Si bond that is chemically and physically stronger than a Ti-O-Si bond is formed by the deposition of zirconium oxide at an interface between the photocatalyst layer and the glaze layer. It is considered that this bond is superior in water resistance and abrasion resistance to titanium oxide obtained by using as a starting compound a titanium alkoxide alone, or titanium oxide that contains a Ti-O-Si bond having a lower chemical stability than a Ti-O-Ti bond and is obtained by using as starting material titanium and a silicon alkoxide. The difference in bond is considered to be also reflected in a physical structure of an oxide film, that is, a photocatalyst layer. The difference is microscopically small and cannot be identified by various measurement or identification methods at the present time. The resultant oxide film, however, apparently has a high level of water resistance and abrasion resistance.

In the present invention, the photocatalyst layer contains 65 to 90% by mass of titanium oxide and 10 to 35% by mass of zirconium oxide. The content of titanium oxide is preferably 67.5 to 85% by mass, more preferably 70 to 80% by mass. The content of zirconium oxide is preferably 15 to 32.5% by mass, more preferably 20 to 30% by mass.

### Sanitary ware

### Body of sanitary ware

The ware body of the sanitary ware according to the present invention is not particularly limited and may be a conventional sanitary ware body. A glaze layer may be provided as an intermediate layer under the glaze layer having the surface texture of the outermost layer.

### Production process of sanitary ware body

The sanitary ware body according to the present invention is preferably produced by the following method. Specifically, at the outset, a ware body is prepared by casting, utilizing a water absorptive mold, of a sanitary ware body slurry prepared from raw materials such as quartz sand, feldspar, and clay into a proper shape. Thereafter, the glaze material is coated by a properly selected commonly used method such as spray coating, dip coating, spin coating, or roll coating onto the dried cast body surface. The cast body with a precursor layer of the surface glaze layer formed thereon is then fired. The firing temperature is preferably a temperature of 1,000 to 1,300°C at which the ware body is sintered and the glaze is softened.

### Glaze

The composition of the glaze for the formation of the glaze layer in the sanitary ware according to the present invention is not particularly limited as long as the above surface texture can be realized. In the present invention, the glaze material may be generally defined as a mixture of naturally occurring mineral particles such as quartz sands, feldspars, and limestones. Examples of pigments include cobalt compounds and iron compounds, and examples of opacifiers include zirconium silicate and tin oxide. Amorphous glazes refer to glazes obtained by melting a glaze material formed of a mixture of the naturally occurring mineral particles and the like at an elevated temperature and rapidly cooling the melt for vitrification, and, for example, frit glazes are suitable for use.

In a preferred embodiment of the present invention, the preferable glaze has a composition comprising, for example, 10 to 30% by weight of feldspar, 15 to 40% by weight of quartz sand, 10 to 25% by weight of calcium carbonate, not more than 10% by weight of each of corundum, talc, dolomite, and zinc flower, and not more than 15% by weight in total of an opacifier and a pigment.

### Production process

The sanitary ware according to the present invention can be produced by applying, preferably coating, a solution containing titanium alkoxide and zirconium alkoxide, that is, a coating liquid, on a sanitary ware having a glaze layer and free from a photocatlyst layer and then firing the coating.

In addition to titanium alkoxide and zirconium alkoxide, other ingredients may be added to the coating liquid. Examples thereof include surfactants such as leveling agents that are added from the viewpoint of enhancing evenness of the photocatalyst layer.

Solvents for the coating liquid are not particularly limited as long as titanium alkoxide and zirconium alkoxide are dissolved. Examples of such solvents include alcohols such as ethanol, isopropanol, and n-butanol; cellosolves such as methyl cellosolve and butyl cellosolve; aromatic hydrocarbons such as toluene and xylene; and esters such as ethyl acetate and butyl acetate.

Preferred methods for the application of the coating liquid on the sanitary ware having a glaze layer and free from a photocatlyst layer include commonly extensively used methods, for example, brush coating, roller coating, spray coating, roll coater coating, flow coater coating, dip coating, flow coating, and screen printing. After coating of the coating liquid on the sanitary ware, firing is carried out. The firing temperature and time may be in the above respective ranges.

### EXAMPLES

The present invention is further illustrated by Examples that are not intended as a limitation of the invention.

The durability (water resistance) of a photocatalyst layer provided on the surface of a sanitary ware against water has substantially the same tendency as the results of an alkali resistance test, and, thus, in Examples, the evaluation was carried out by the following alkali resistance test.

### Preparation of coating liguid for photocatalyst layer formation

Titanium alkoxide (titanium diisopropoxybis(acetyl acetonate), NDH-510C, manufactured by Nippon Soda Co., Ltd.) and zirconium alkoxide (zirconium tributoxy monoacetyl acetonate, OrgatixZC-540, manufactured by Matsumoto Fine Chemical Co. Ltd.) were mixed together so that the solid weight ratio after firing was as specified in the following table. The mixtures were then diluted with a mixed solvent composed of 2-propanol (80%) and methyl cellosolve (20%) so that the solid content after firing was 1%, followed by stirring the diluted solutions with a stirrer. The mixed solutions thus obtained were allowed to stand for one hr or longer to prepare coating liquids.

### Preparation of ceramic tiles

Starting materials for ceramics were cast into a body. A glaze was coated on the surface of the body with a hand spray gun (F100, manufactured by Meiji Machine Co., Ltd.). Subsequently, the glazed ceramic was fired by passage through a tunnel kiln set at a maximum temperature of 1180°C for 24 hr while gradually raising and falling the temperature to obtain ceramic tiles.

### Photocatalyst layer formation

The coating liquids were coated on the surface of the ceramic tiles with a hand spray gun (F100, manufactured by Meiji Machine Co., Ltd.) while regulating the coverage to 100 nm in terms of layer thickness after firing. Subsequently, the ceramic tiles were fired in a high-temperature electric furnace (FUH732DA, manufactured by ADVANTEC) set at a maximum temperature of 770°C for 24 hr while gradually raising and falling the temperature to obtain photocatalyst-coated tiles.

### Hydrophilicity test

The photocatalyst-coated tiles thus obtained were exposed to a black light (FL20SBLB-A, manufactured by TOSHIBA LIGHTING & TECHNOLOGY CORPORATION) for 5 hr so that the ultraviolet intensity measured with an ultraviolet intensity meter (an optical power meter for a photocatalyst (C9536-01, H9958), manufactured by Hamamatsu Photonics K.K.) was 0.2 ± 0.01 mW/cm². Distilled water was spread on the surface of the tiles. Inspection was made for water film formation, and, further, the time taken until a water film was broken was measured. The results were evaluated according to the following criteria.
○: Water film was formed and 30 sec or longer was taken until water film was broken.
Δ: Water film was formed but was broken before 30 sec or longer elapsed.
x: Water film was not formed.

### Photocatalytic activity

The photocatalytic activity of photocatalyst-coated tiles was evaluated based on a methylene blue decomposition index according to Japanese Industrial Standards R1703-2. The results were evaluated according to the following criteria.
○: A decomposition index of 10 or more
Δ: A decomposition index of 5 (inclusive) to 10 (exclusive)
x : A decomposition index of less than 5

### Alkali resistance test (evaluation of water resistance)

The photocatalyst-coated tiles were immersed in a 5% aqueous sodium hydroxide (guaranteed reagent, manufactured by Wako Pure Chemical Industries, Ltd.) solution kept at 30°C. After immersion for a predetermined period of time, a tape peel test was carried out based on JIS K 5600-5-6. The results were evaluated according to the following criteria.
○: Not peeled when immersed for 80 hr
Δ: Peeled when immersed for less than 80 hr
x : Peeled when immersed for 40 hr or less

### Sliding resistance test

A sliding resistance test of the photocatalyst-coated tiles was carried out with a rubbing tester (manufactured by OHIRA RIKA Industry. Co., Ltd.). A sponge piece obtained by cutting a urethane sponge Scotch-Brite (SS-72K, manufactured by Sumitomo 3M Ltd.) into a size of 2.24 cm square was bonded with a pressure sensitive adhesive double coated tape to a head so that the nonwoven fabric part was brought into contact with a sliding surface, followed by wetting with distilled water. A weight of 250 g was placed (loading conditions: 5 kPa), and sliding was performed by a predetermined number of times. The samples were then visually inspected for the presence of surface scratch. The urethane sponge was replaced by a fresh one for each sliding of 1000 times. The results were evaluated according to the following criteria.
○: No noticeable scratch when slid by 2000 times
Δ: No noticeable scratch when slid by 1000 times
x: Noticeable scratch when slid by 1000 times

The results were as shown in the following table.

**[Table 1]**

| Example | TiO₂ (% by mass) | ZrO₂ (% by mass) | Hydrophilicity | Photocatalytic activity | Water resistance | Sliding resistance |
|---|---|---|---|---|---|---|
| 1 | 100 | 0 | ○ | ○ | Δ | × |
| 2 | 97.5 | 2.5 | ○ | ○ | Δ | × |
| 3 | 95 | 5 | ○ | ○ | Δ | × |
| 4 | 92.5 | 7.5 | ○ | ○ | Δ | × |
| 5 | 90 | 10 | ○ | ○ | ○ | × |
| 6 | 85 | 15 | ○ | ○ | ○ | Δ |
| 7 | 80 | 20 | ○ | ○ | ○ | ○ |
| 8 | 75 | 25 | ○ | ○ | ○ | ○ |
| 9 | 70 | 30 | ○ | ○ | ○ | ○ |
| 10 | 65 | 35 | ○ | ○ | ○ | ○ |
| 11 | 60 | 40 | Δ | Δ | Δ | ○ |
| 12 | 50 | 50 | × | × | ○ | ○ |

## Claims

1. A sanitary ware comprising a glaze layer and a photocatalyst layer provided on the glaze layer, wherein
the photocatalyst layer is an oxide film comprising a co-fired product of a precursor of titanium oxide and a precursor of zirconium oxide and contains 65 to 90% by mass of titanium oxide and 10 to 35% by mass of zirconium oxide.

2. The sanitary ware according to claim 1, wherein the content of titanium oxide is 65 to 85% by mass and the content of zirconium oxide is 15 to 35% by mass in the photocatalyst layer.

3. The sanitary ware according to claim 1 or 2, wherein photocatalyst layer has methylene blue decomposition index of 5 or more.

4. The sanitary ware according to any one of claims 1 to 3, wherein photocatalyst layer has a thickness of 50 to 200 nm.

5. The sanitary ware according to any one of claims 1 to 4, wherein the firing has been carried out at 700 to 800°C.

6. The sanitary ware according to any one of claims 1 to 5, wherein the precursor of titanium oxide is a titanium alkoxide or a titanium chelate.

7. The sanitary ware according to any one of claims 1 to 6, wherein the titanium alkoxide is represented by general formula Ti(OR)₄ wherein OR represents a C₁₋₆ alkoxy group, acetyl acetonate, or ethyl acetoacetate.

8. The sanitary ware according to claim 7, wherein the titanium alkoxide is one of or a mixture of two or more of substances selected from the group consisting of tetraethoxytitanium, tetraisopropoxytitanium, tetra-n-propoxytitanium, tetrabutoxytitanium, tetramethoxytitanium, titanium diisopropoxybis(acetyl acetonate), and titanium diisopropoxybis(ethyl acetoacetate).

9. The sanitary ware according to claim 6, wherein the titanium chelate is titanium tetraacetyl acetonate.

10. The sanitary ware according to any one of claims 1 to 9, wherein the precursor of zirconium oxide is zirconium alkoxide or zirconium chelate.

11. The sanitary ware according to any one of claims 1 to 10, wherein the zirconium alkoxide is represented by general formula: Zr(OR)₄ wherein OR represents a C₁₋₆ alkoxy group, acetyl acetonate, or ethyl acetoacetate.

12. The sanitary ware according to claim 10, wherein the zirconium alkoxide is one of or a mixture of two or more of substances selected from the group consisting of zirconium tetraethoxide, zirconium tetraisopropoxide, zirconium tetrabutoxide, zirconium tributoxy monoacetyl acetonate, zirconium dibutoxybis(ethyl acetoacetate), and zirconium monobutoxy acetylacetonate bis(ethyl acetoacetate).

13. The sanitary ware according to claim 10, wherein the zirconium chelate is zirconium tetraacetyl acetonate.

14. The sanitary ware according to any one of claims 1 to 13, which is toilet bowl, urinal, strainer for urinals, flush tank for toilets or urinals, washbowl in washstands, or wash hand basin.

15. A process for producing a sanitary ware according to any one of claims 1 to 14, the process comprising applying a solution containing at least a precursor of titanium oxide and a precursor of zirconium oxide on a surface of a sanitary ware free from a photocalyst layer and then firing the coating to form a photocatalyst layer.

16. The process according to claim 15, wherein the firing is carried out at a temperature of 700 to 800°C.
